# EUROPÄISCHE PATENTSCHRIFT

(11) **EP 4 102 462 B1**
(45) Veröffentlichungstag und Bekanntmachung des Hinweises auf die Patenterteilung: **23.04.2025**
(21) Anmeldenummer: 21178167.9
(22) Anmeldetag: 08.06.2021
(51) Int. Cl.: G06T 7/521, G06T 7/593, G01B 11/25

(54) **VERFAHREN ZUR ERZEUGUNG VON TIEFENBILDERN UND KORRESPONDIERENDE TIEFENBILDBERECHNUNGSEINRICHTUNG**
METHOD FOR PRODUCING DEPTH IMAGES AND CORRESPONDING DEPTH IMAGE CALCULATION DEVICE
PROCÉDÉ DE GÉNÉRATION DES IMAGES DE PROFONDEUR ET DISPOSITIF DE CALCUL POUR IMAGES DE PROFONDEUR CORRESPONDANT

(43) Veröffentlichungstag der Anmeldung: 14.12.2022
(73) Patentinhaber: SensoPart Industriesensorik GmbH, 79695 Wieden (DE)
(72) Erfinder: GIESECKE, Johannes, 79100 Freiburg (DE); WEIß, Robert, 79100 Freiburg (DE)
(74) Vertreter: Mertzlufft-Paufler, Cornelius

(56) Entgegenhaltungen:
- EP-A1- 2 166 304
- XIDA CHEN ET AL: "Recovering Dense Stereo Depth Maps Using a Single Gaussian Blurred Structured Light Pattern", 2013 INTERNATIONAL CONFERENCE ON COMPUTER AND ROBOT VISION (CRV 2013) : REGINA, SASKATCHEWAN, CANADA, 28 - 31 MAY 2013, IEEE, PISCATAWAY, NJ, 28 May 2013 (2013-05-28), pages 295 - 302, XP032444260, ISBN: 978-1-4673-6409-6, DOI: 10.1109/CRV.2013.22
- KIM J H ET AL: "VISUAL MEASUREMENT OF A 3-D PLANE POSE BY A CYLINDRICAL STRUCTURED LIGHT", PROCEEDINGS OF THE INTERNATIONAL CONFERENCE ON INTELLIGENT ROBOTS AND SYSTEMS (IROS). YOKOHAMA, JULY 26 - 30, 1993; [PROCEEDINGS OF THE INTERNATIONAL CONFERENCE ON INTELLIGENT ROBOTS AND SYSTEMS (IROS)], NEW YORK, IEEE, US, vol. 3, 26 July 1993 (1993-07-26), pages 1845 - 1850, XP000452459

## Beschreibung

Die Erfindung betrifft ein Verfahren zur Erzeugung von Tiefenbildern, wobei mit wenigstens zwei Kameras Bilder einer Szene aufgenommen werden, wobei aus inhaltlichen Korrespondenzen zwischen den Bildern eine Tiefeninformation abgeleitet wird, wobei die Szene während der Aufnahme der Bilder mit strukturiertem Licht beleuchtet wird.

Derartige Verfahren sind bekannt, wobei das strukturierte Licht benutzt wird, um den Detailreichtum eines beleuchteten Objektes zu vergrößern. Somit lassen sich inhaltlich korrespondierende, lokale Bildbereiche leichter identifizieren, so dass lokale Tiefeninformationen in einer verbesserten Genauigkeit berechnet werden können, insbesondere bei strukturlosen Flächen der Szene.

Häufig werden hierzu inhaltliche Korrespondenzen zwischen Einzelheiten zueinander gehöriger Bilder der beiden Kameras verwendet, um eine Differenz von Blickwinkeln oder eine binokulare Disparität zu ermitteln, aus der sich eine lokale Tiefeninformation zu diesen Einzelheiten ergibt.

Die Erfindung betrifft weiter eine Tiefenbildberechnungseinrichtung. Mit derartiger Tiefenbildberechnungseinrichtung sind beispielsweise die beschriebenen Verfahren ausführbar.

Die EP 2 166 304 Al zeigt eine Beleuchtungseinheit mit einer divergenten kohärenten Lichtquelle zur Erzeugung eines zumindest lokal selbstunähnlichen Musters in einem Überwachungsbereich (12) angegeben. Dabei weist die Beleuchtungseinheit im Strahlengang der Lichtquelle ein optisches Phasenelement auf, welches Unebenheiten aufweist, die dafür ausgebildet sind, lokale Phasendifferenzen zwischen benachbart auf das Phasenelement treffenden Lichtanteilen und somit das selbstunähnliche Muster durch Interferenzen zu erzeugen.

Chen et al., Recovering Dense Stereo Depth Maps Using A Single Gaussian Blurred Structured Light Pattern, 2013 International Conference on Computer and Robot Vision, DOI 10.1109 /CRV.2013.22, beschreibt ein Verfahren zur Tiefenbestimmung, bei dem ein Stereo-Bildpaar mit strukturiertem Licht verwendet wird.

Kim et al., Visual Measurement of a 3-D Plane Pose by a Cylindrical Structured Light, Proceedings of the 1993 IEEE/R SJ International Conference on Intelligent Robots and Systems Yokohama, Japan, Bd. 3, 26. Juli 1993, beschreibt ein Verfahren zur Messung von Tiefe und Ausrichtung eines lokalen Bereichs einer Objektoberfläche, wobei mittels eines Lasers ein zylindrisches strukturiertes Licht auf die Objektoberfläche projiziert wird.

Der Erfindung liegt die Aufgabe zugrunde, die Genauigkeit der Berechnung lokaler Tiefeninformationen zu steigern.

Zur Lösung der genannten Aufgabe sind erfindungsgemäß die Merkmale des Anspruchs 1 vorgesehen. Erfindungsgemäß wird somit zur Lösung der genannten Aufgabe bei einem Verfahren der eingangs beschriebenen Art vorgeschlagen, dass Kontrastverläufe des strukturierten Lichts geglättet sind. Durch die Glättung können auf einfache Weise homogene Intensitätsbereiche im strukturierten Licht vermindert oder sogar vermieden werden. Somit lässt sich einfach vermeiden, dass ein Rauschen signifikante Artefakte einführt, die zu Fehlberechnungen der Tiefeninformationen führen.

Die Erfindung hat somit erkannt, dass eine Abkehr von bivalenten oder oligovalenten Beleuchtungsmustern förderlich für die Genauigkeit der Berechnung der Tiefeninformation ist.

Erfindungsgemäß ist weiter vorgesehen, dass eine lokale Glättungsbreite in wenigstens einem Teilbereich größer als eine charakteristische Länge von Beugungseffekten und/oder Abbildungsfehlern einer Projektion des strukturierten Lichts ist. Somit ist auch auf dem Objekt nachweisbar, dass das strukturierte Licht an Intensitätswechseln oder Kontrasten deutlich sichtbare Übergänge über eine Glättungsbreite aufweist. Somit ist eine quasi-kontinuierliche Intensitätsmodulation in Bereichen starker Intensitätswechsel oder Kontraste erreichbar, welche beispielsweise dazu nutzbar ist, das Auftreten von Artefakten zu vermeiden. Dies kann sich positiv auf das Ergebnis einer Filterung, beispielsweise mit einer Census-Transformation, auswirken.

Eine Glättungsbreite kann hierbei beispielsweise als eine charakteristische Länge beschreibbar sein, über welche sich ein Intensitätswechsel an einem Bildkontrast vollzieht.

Ein Tiefenbild kann beispielsweise als ein Datenfeld mit ortsabhängiger Distanzinformation, insbesondere für jeden Eintrag des Datenfelds, charakterisiert werden. Bevorzugt umfasst das Datenfeld auch weitere Bildinformationen, insbesondere Helligkeits- und/oder Farbwerte. Beispielsweise können die inhaltlichen Korrespondenzen als stereoskopische Disparitäten, insbesondere für Bildpunkte der Bilder, oder durch nach einem stereoskopischen Prinzip eingelernte künstliche neuronale Netze oder allgemein als Korrespondenzen, die sich aus der Annahme ergeben, dass beide Bilder dieselbe Szene oder dasselbe Objekt aus unterschiedlichen Blickwinkeln oder Posen zeigen, charakterisiert sein und/oder berechnet werden. Diese Korrespondenzen können beispielsweise explizit berechnet oder implizit zur Berechnung der Tiefeninformation ermittelt oder verarbeitet werden.

In einer Ausführung kann das strukturierte Licht zumindest in einem Teilbereich ein Muster aufweisen, bei dem unterschiedliche zusammenhängende Musterelemente verwendet werden. Die Erfindung stellt somit wenigstens einen zusätzlichen Freiheitsgrad, beispielsweise im Sinne einer Variabilität von Eigenschaften der Musterelemente, bei der Mustergestaltung bereit, wodurch eine lokale Selbstähnlichkeit des Musters reduzierbar oder vermeidbar ist.

Ein zusammenhängendes Musterelement kann beispielsweise als alle Punkte im Muster charakterisiert werden, die oberhalb oder unterhalb eines Intensitätsschwellwerts liegen und die miteinander durch einen Weg, der nur über Punkte im Musterelement führt, verbindbar sind.

Beispielsweise kann vorgesehen sein, dass sich die Musterelemente hinsichtlich einer Größe unterscheiden. Somit ist ein einfach zu variierender Parameter für ein Optimierungsverfahren beschrieben, das die Selbstähnlichkeit gewisser Musterumgebungen, beispielsweise im Rahmen einer stereoskopischen Korrespondenzsuche, minimiert.

Beispielsweise kann alternativ oder zusätzlich vorgesehen sein, dass sich die Musterelemente hinsichtlich einer Form unterscheiden. Somit ist beispielsweise ein diskreter Satz von unterschiedlichen Formklassen verwendbar, um die Ähnlichkeit gewisser Musterumgebungen zu reduzieren oder zu vermeiden. Es kann aber auch vorgesehen sein, dass die Form durch einen kontinuierlichen Parameter, beispielsweise durch einen Winkel zwischen zwei Einzelheiten, variierbar ist. Dies kann zusätzliche Möglichkeiten eröffnen, verbleibende lokale Selbstähnlichkeiten zu reduzieren.

Beispielsweise kann alternativ oder zusätzlich vorgesehen sein, dass sich die Musterelemente hinsichtlich einer Glättungsbreite unterscheiden. Somit sind auf einfache Weise sehr lokale Selbstähnlichkeiten in homogenen Bildbereichen beseitigbar.

In einer Ausführung kann das strukturierte Licht ein unregelmäßiges Muster aufweisen. Somit ist ein einfaches Mittel beschrieben, ein möglichst wenig selbstähnliches Muster zu erzeugen. Eine geringe Selbstähnlichkeit, beispielsweise im Rahmen einer stereoskopischen Korrespondenzsuche für miteinander zu vergleichende Bildumgebungen, bevorzugt nach einer Rektifizierung, ist von Vorteil, wenn Fehlzuordnungen von Bildinhalten bei der Berechnung von Disparitäten vermieden werden sollen.

Beispielsweise kann vorgesehen sein, dass das Muster unregelmäßig in Bezug auf eine Lage der Musterelemente ausgebildet ist. Die Erfindung hat somit erkannt, dass durch eine bewusste Abweichung von einer regelmäßigen Position, beispielsweise durch eine bewusste Abweichung von Gitterpunkten eines regelmäßigen Gitters, wenigstens ein zusätzlicher Freiheitsgrad eingeführt wird, der es ermöglicht, eine lokale Selbstähnlichkeit des Musters zu verringern.

Beispielsweise kann auch vorgesehen sein, dass das Muster unregelmäßig in Bezug auf eine Größe der Musterelemente ausgebildet ist. Eine Größe, also beispielsweise eine größte Abmessung oder eine Abmessung in einer bestimmten Richtung, kann einen Freiheitsgrad bezeichnen, dessen Variation von Musterelement zu Musterelement verwendbar ist, um eine Selbstähnlichkeit zu reduzieren.

Beispielsweise kann auch vorgesehen sein, dass das Muster unregelmäßig in Bezug auf eine Form der Musterelemente ausgebildet ist. Es sind somit - beispielsweise an regelmäßig angeordneten Positionen - unregelmäßige Anordnungen von Musterelementen auszubilden. Somit ist ein weiteres Mittel bereitgestellt, die Selbstähnlichkeit, insbesondere in einer Suchrichtung für Korrespondenzsuchen, zu vermindern.

Beispielsweise kann vorgesehen sein, dass das Muster unregelmäßig in Bezug auf eine Glättungsbreite der Musterelemente ausgebildet ist. Die Erfindung hat erkannt, dass eine vergrößerte Glättungsbreite positive Auswirkungen auf die Verringerung von Fehlkorrespondenzen, die aufgrund der verwendeten Algorithmen, beispielweise durch die mit einer Census-Transformation einhergehende Informationsreduktion, an nahezu homogenen Bildbestandteilen entstehen können, hat.

Durch die Möglichkeit einer Variation der Glättungsbreite zur Vermeidung von unerwünschten inhaltlichen Korrespondenzen lässt sich dieser Effekt mitnutzen.

Hierbei kann vorgesehen sein, dass ein vorzugsweise lokales Verschiedenheitsmaß auf dem Muster im Wesentlichen Werte oberhalb eines von Null verschiedenen Schwellwerts annimmt. Verschiedenheitsmaße können ein einfach handhabbares Mittel sein, um eine möglichst wenig selbstähnliche Struktur zu generieren und/oder um einen geringen Grad an Selbstähnlichkeit bei einer vorgegebenen Struktur zu verifizieren.

Das Maß zur Bestimmung der paarweisen Verschiedenheit von Bildumgebungen zur Erzeugung eines optimalen Beleuchtungsmusters kann beispielsweise genau dem jeweils für die stereoskopische Korrespondenzsuche verwendeten Verschiedenheitsmaß entsprechen. Hier ist beispielsweise eine Hamming-Distanz einer vorzugsweise zweiwertigen Census-Transformation von Bildumgebungspaaren ein geeignetes Maß, das sich durch einen geringen Speicherbedarf und Berechnungsaufwand bei einem mit Blick auf stereoskopische Anforderungen verhältnismäßig geringen Informationsverlust auszeichnet. Gerade in Bezug auf die Census-Transformation hat es sich als günstig erwiesen, geglättete Intensitätsverläufe zu verwenden, weil sich so Rausch-Artefakte unterdrücken lassen.

Alternativ oder zusätzlich kann hierbei vorgesehen sein, dass eine lokale Unregelmäßigkeit des Musters durch wenigstens einen charakteristischen Parameter, der eine Vielzahl von Werten annehmen kann, beschreibbar ist. Somit ist ein Parameterraum definierbar, mit dem - beispielsweise ausgehend von einer regelmäßigen Anordnung oder einer zufällig gegenüber einer regelmäßigen Anordnung veränderten Anordnung - ein Optimierungsverfahren ausführbar ist, um eine möglichst geringe Selbstähnlichkeit des Musters zu erreichen. Ein besonders günstiger Startpunkt für das Optimierungsverfahren kann beispielsweise durch eine Startkonfiguration mit möglichst hohem Verschiedenheitsmaß aufgrund von Gleichverteilung der Musterelementeigenschaften als Zuständen im Parameterraum gewählt sein.

Eine Liste von Beispielen für einen solchen charakteristischen Parameter kann beispielsweise eine Lage und/oder eine Größe und/oder eine Form und/oder eine Glättungsbreite eines Musterelements oder eines Teilelements eines Musterelements umfassen.

Bei einer vorteilhaften Ausgestaltung kann vorgesehen sein, dass sich das Beleuchtungsmuster aus kongruenten Basiszellen mit periodischen Randbedingungen zusammensetzt. Somit lassen sich auf einfache Weise größere Muster zusammensetzen.

Ein stereoskopisches Messsystem hat in der Regel einen definierten Tiefenbereich und damit verbunden einen Disparitätsbereich - beispielsweise gemessen in Pixeln, zu dessen Auflösung es imstande sein muss. Dieser Disparitätsbereich kann die Breite der Basiszelle als kleinstmögliche Einheit innerhalb des Beleuchtungsmusters wesentlich definieren. Innerhalb dieser Breite (oder Längs-Kantenlänge) sollte entlang der stereoskopischen Korrespondenzsuchrichtung die Selbstähnlichkeit von Musterumgebungen minimal sein. Senkrecht zur stereoskopischen Korrespondenzsuchrichtung kann die Höhe der Basiszelle (oder Quer-Kantenlänge) dagegen bevorzugt mindestens der Größe der zur stereoskopischen Korrespondenzsuche verwendeten Musterumgebungen (Matching-Blockgröße) entsprechen. Damit ist beispielhaft die Mindestgröße kongruenter rechteckförmiger Basiszellen mit periodischen Randbedingungen gegeben, aus denen sich das Beleuchtungsmuster kachelförmig zusammensetzen kann.

Durch solche Wahl der Abmessungen der Basiszelle ist gewährleistet, dass korrespondierende Bildpunkte stets innerhalb der Basiszell-Abmessung gesucht werden und inhaltliche Wiederholungen von Musterumgebungen außerhalb der Basiszelle, insbesondere quer zu einer Suchrichtung keinen negativen Einfluss auf ein Auffinden tatsächlich zueinander korrespondierender Einzelheiten haben. Des Weiteren ist durch die Einschränkung der Musterberechnung auf die hier detaillierte Minimalgröße der Basiszelle ein möglichst geringer Berechnungsaufwand gewährleistet.

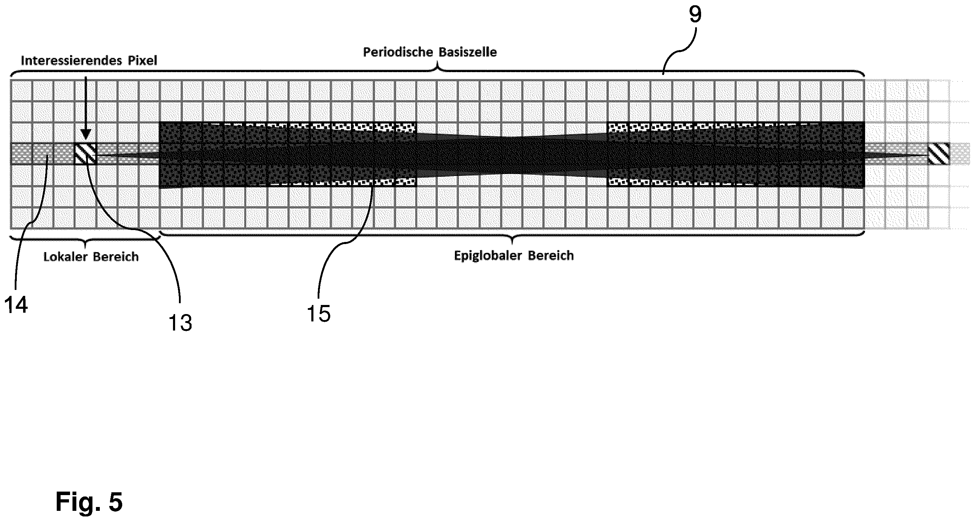

Die stereoskopische Korrespondenzsuchrichtung des Datenerfassungssystems, d.h. die Epipolarrichtung der rektifizierten Stereobilder, ist nicht zwingend identisch mit der Richtung, entlang der die Selbstähnlichkeit von Musterumgebungen des Beleuchtungsmusters minimiert wird. Durch Fertigungstoleranzen bei der Herstellung der Lichtquelle und des Bildaufnahmesystems sowie durch optische Abbildungsfehler kann es zu Abweichungen zwischen diesen beiden Richtungen kommen, die eine Winkelfehlpassung zwischen Beleuchtungsmuster und Datenerfassungssystem begründen können. Die Erfindung hat hierbei erkannt, dass eine solche Winkelfehlpassung bei der Berechnung eines mit Blick auf minimale Selbstähnlichkeit optimierten Beleuchtungsmusters berücksichtigt werden kann. Dies kann beispielsweise durch Minimierung der paarweisen Selbstähnlichkeit von Musterumgebungen nicht nur genau entlang der vermeintlichen stereoskopischen Korrespondenzsuchrichtung, sondern innerhalb eines Kegels um diese Suchrichtung herum mit einem der maximal zu erwartenden Winkelfehlpassung entsprechenden Öffnungswinkel umgesetzt werden (vgl. Fig 5).

Bei einer vorteilhaften Ausgestaltung kann vorgesehen sein, dass das Muster, insbesondere jedes Musterelement, aus Teilelementen zusammengesetzt ist, die über einen für das gesamte Muster einheitlichen Parametersatz zu ihrer vollständigen Beschreibung verfügen. Die mit der Erfindung verbundene Optimierung eines für stereoskopische Bildverarbeitung geeigneten Beleuchtungsmusters wird somit durch sukzessive Maximierung der paarweisen Verschiedenheit von Musterumgebungen aller Teilelement-Parameterräume des Musters erreicht. Hierbei wird ein lokales Optimum in der Vereinigung der Parameterräume aller Teilelemente angestrebt.

Mit bereits vergleichsweise niedrigdimensionalen (z.B. dreidimensionalen) Teilelement-Parameterräumen ist es möglich, mit dem erfindungsgemäßen Verfahren im Vergleich zum Stand der Technik sehr hohe Verschiedenheitsmaße zu erzeugen.

Allgemein kann somit für viele Ausführungsbeispiele gesagt werden, dass die Lichtintensitätsverteilung in der Basiszelle des strukturierten Beleuchtungsmusters aus der Maximierung einer Metrik zur Messung der paarweisen Verschiedenheit aller möglichen Musterumgebungen definierter Größe entlang der stereoskopischen Korrespondenz-Suchrichtung resultiert.

Hierbei kann die genannte Metrik zur Messung der paarweisen Verschiedenheit aller möglichen Musterumgebungen definierter Größe entlang der stereoskopischen Korrespondenz-Suchrichtung in der Basiszelle in Abhängigkeit der Lage aller diese Musterumgebungen überlagernden Muster- oder Teilelemente sowie deren weiterer Eigenschaften (z.B. Größe, Glättungsbreite oder Form) berechnet werden, die den genannten Teilelement-Parameterraum aufspannen.

Dies kann ermöglichen, dass die bereits genannte Metrik im sequentiellen Durchlauf sogenannter mit den Teilelementen korrespondierender Elementarzellen, die die Basiszelle in gleichmäßige Teilbereiche strukturieren, jeweils unter Variation aller Eigenschaften der Teilelemente innerhalb eines definierten Parameterraums maximiert wird. Hierbei können beispielsweise stets alle Musterumgebungen betrachtet werden, die im Bereich substantieller Intensitätsänderung aufgrund der Lage- Größen-, oder Form-Parameteränderung der jeweiligen Muster- oder Teilelemente liegen.

Es kann vorgesehen sein, dass die erwähnte Metrik zur Beschreibung der paarweisen Verschiedenheit von Musterumgebungen definierter Größe für jede Musterumgebung in geeigneten Verteilungen strukturiert wird, wobei eine Verteilung die paarweise Verschiedenheit aller Musterumgebungen innerhalb eines sehr kleinen lokalen Bereichs (wenige, z.B. drei, Bildpunkte des Datenerfassungssystems) entlang der stereoskopischen Korrespondenz-Suchrichtung um eine jeweils interessierende Musterumgebung erfasst (lokale Verteilung), während eine weitere Verteilung die paarweise Verschiedenheit aller weiteren entlang der stereoskopischen Korrespondenz-Suchrichtung liegenden Musterumgebungen um eine interessierende Musterumgebung erfasst (epiglobale Verteilung).

Hierbei kann sich ergeben, dass die lokalen und/oder epiglobalen Verteilungen der erwähnten Metrik über alle Musterumgebungen einer Basiszelle zu einer geeignet aggregierten skalaren Metrik zusammengefasst werden, deren Maximum ein optimales Beleuchtungsmuster kennzeichnet.

Die erwähnte Metrik kann beispielsweise durch eine Hamming-Distanz von Census-Transformierten von Musterumgebungen repräsentiert sein. Musterumgebungen können hierbei beispielsweise als die ein jeweils interessierendes Pixel umrahmenden, vorzugsweise quadratischen, Pixelblöcke des Datenerfassungssystems oder aufgenommenen Bildes verstanden und/oder beschrieben werden.

Die erwähnte aggregierte skalare Metrik kann beispielsweise durch eine Summe der von 0 verschiedenen epiglobalen Verteilungsminima aller Musterumgebungen der Basiszelle (diese - wie erwähnt - beispielsweise repräsentiert durch vorzugsweise quadratische Pixelblöcke des Datenerfassungssystems) multipliziert mit der Summe der von 0 oder 1 oder 2 verschiedenen lokalen Verteilungsminima aller Musterumgebungen der Basiszelle repräsentiert sein.

Es kann weiter vorgesehen sein, dass bei der Berechnung genannter lokaler und epiglobaler Verteilungen der genannten Metrik nicht nur durch diskrete Pixelblöcke des Datenerfassungssystems repräsentierte Musterumgebungen herangezogen werden, sondern auch deren Interpolationen, wobei Musterumgebungen in Gestalt von vorzugsweise quadratischen Pixelblöcken, vorzugsweise auf einem Untergitter von 2x2 oder 4x4 Subpixeln, interpoliert werden. Die bereits bekannte Berücksichtigung von Subpixelverschiebungen zwischen Beleuchtungsmuster und Datenerfassungssystem ist für die Optimierung des Beleuchtungsmusters mit Vorteil verwendbar.

Bei der Berechnung der bereits erwähnten epiglobalen Verteilung der oben beschriebenen Metrik kann eine mögliche Winkelfehlpassung zwischen der vermeintlichen stereoskopischen Korrespondenz-Suchrichtung qua Design des Beleuchtungsmusters und der wahren Korrespondenz-Suchrichtung des Datenerfassungssystems berücksichtigt werden. Hierbei können beispielsweise alle Musterumgebungen innerhalb eines, beispielsweise des bereits genannten, begrenzenden Kegels um die Korrespondenz-Suchrichtung jeweils ausgehend von einer interessierenden Musterumgebung betrachtet werden.

Es kann weiter vorgesehen sein, dass bei der Berechnung der oben genannten Verteilungen zu der beschriebenen Metrik die Unschärfe der optischen Abbildung sowohl des Beleuchtungsmusters auf seiner Projektionsfläche sowie seiner Bilder im Datenerfassungssystem (Kameras) - beispielsweise durch Faltung des Beleuchtungsmusters mit einer zweidimensionalen Gaußfunktion charakteristischer Breite - berücksichtigt werden.

Zur weiteren Verbesserung kann im Zuge der Berechnung oben beschriebener Metriken zur Musteroptimierung vorgesehen sein, dass bei der Berechnung der Hamming-Distanz der Census-Transformierten zweier Musterelemente oder Teilelemente nur diejenigen Pixel zur Hamming-Distanz beitragen, deren Intensitätsunterschiede sich signifikant aus dem Rauschen des Datenerfassungssystems (Kameras) abheben.

Bei einer vorteilhaften Ausgestaltung kann vorgesehen sein, dass das Muster aus Teilelementen, beispielsweise den bereits erwähnten Teilelementen, zusammengesetzt ist, wobei eine, insbesondere die bereits erwähnte, Basiszelle in gleichgroße, vorzugsweise quadratische, Elementarzellen unterteilbar ist, so dass jeder Elementarzelle wenigstens ein Teilelement, insbesondere genau ein Teilelement oder eine gleichbleibende Anzahl von Teilelementen, zugeordnet ist. Somit ist auf einfache Weise eine unregelmäßige Anordnung von Musterelementen und/oder Teilelementen auf eine regelmäßige Anordnung zurückführbar, bei der die Unregelmäßigkeit als Abweichung von der regelmäßigen Anordnung hervortritt, beispielsweise in Bezug auf eine Lage der Musterelemente und/oder Teilelemente in der zugehörigen Elementarzelle, eine Größe des Musterelements und/oder des Teilelements, eine Ausrichtung des Musterelements und/oder des Teilelements relativ zur Elementarzelle, eine Form des Musterelements und/oder des Teilelements und/oder eine Glättungsbreite des Musterelements und/oder des Teilelements.

Die Verwendung von Teilelementen, aus denen die Musterelemente zusammengesetzt sind, kann helfen, eine Komplexität des Musters zu reduzieren und so einen Rechenaufwand zur Minimierung der Selbstähnlichkeit zu verringern.

Es kann beispielsweise vorgesehen sein, dass eine Zuordnung von Teilelementen zu Elementarzellen durch eine Position eines Intensitätsextremwerts des Teilelements innerhalb der ihm zugeordneten Elementarzelle gegeben ist. Somit ist auf einfache Weise eine eineindeutige Zuordnung definierbar und/oder überprüfbar, insbesondere wenn jedes Musterelement oder jedes Teilelement jeweils genau einen Intensitätsextremwert (Maximum bei hellen Musterelementen, Minimum bei dunklen Musterelementen) aufweist.

Bei einer vorteilhaften Ausgestaltung kann vorgesehen sein, dass das Muster rotationssymmetrische oder elliptische zusammenhängende Teilelemente aufweist. Derartige Teilelemente lassen sich besonders einfach in nahezu beliebiger Ausprägung erzeugen, insbesondere mit diffraktiven optischen Elementen.

Es kann beispielsweise vorgesehen sein, dass die Musterelemente oder die Teilelemente jeweils die Gestalt zweidimensionaler gaußförmiger Lichtintensitätsverteilungen aufweisen, mit den Optimierungsparametern der horizontalen und vertikalen Schwerpunktlage sowie der Verteilungsbreite.

Hierbei kann vorgesehen sein, dass die Teilelemente mit unterschiedlichen Größen und/oder Verteilungs- bzw. Glättungsbreiten ausgebildet sind. Es hat sich gezeigt, dass hierdurch - verbunden gegebenenfalls mit einer frei wählbaren Lage beispielsweise in der Elementarzelle - ausreichender Freiraum für das Erreichen eines hochgradig lokal verschiedenen Musters geschaffen ist.

Generell ist jeder Projektor, mit dem ein gewünschtes Muster als ein Beleuchtungsmuster auf ein Objekt projizierbar ist, verwendbar. Beispielsweise könnte das Muster mit Spiegelarrays und/oder durchleuchteten Masken und/oder Arrays von miniaturisierten Leuchtelementen erzeugt werden.

Bei einer vorteilhaften Ausgestaltung kann vorgesehen sein, dass das strukturierte Licht mit einem diffraktiven optischen Element erzeugt wird. Es hat sich herausgestellt, dass sich auf diese Weise geeignete Muster einfach erzeugen lassen.

Hierbei oder allgemein kann vorgesehen sein, dass sich überlagernde Musterelemente oder Teilelemente Interferenzen bilden. Durch dieses Interferenzmuster kann eine zusätzliche Struktur geschaffen werden, die eine Selbstähnlichkeit noch weiter reduzieren kann.

Bei einer vorteilhaften Ausgestaltung kann vorgesehen sein, dass Lichtintensitätsmaxima aller Teilelemente in einem vorgegebenen Intensitätsband liegen. Somit kann ein dynamischer Bereich der Kameras gut ausgenutzt werden.

Es kann somit vorgesehen sein, dass die Lichtintensitätsamplitude jedes geglätteten Musterelements oder Teilelements einen möglichst großen Teil der Dynamik des Datenerfassungssystems ausschöpft, insbesondere sodass lokale Lichtintensitätsminima möglichst klein und lokale Lichtintensitätsmaxima von möglichst über die Musterfläche homogener Amplitude gekennzeichnet sind.

Hierbei kann vorgesehen sein, dass das Intensitätsband, beispielsweise als Band zulässiger Maximalintensitäten, eine Breite hat, die weniger als 25%, bevorzugt weniger als 10%, einer mittleren Maximalintensität aller Teilelemente beträgt.

Es hat sich herausgestellt, dass eine Ausnutzung des dynamischen Bereichs der Kameras umso besser gelingt, je schmaler das Band zulässiger Maximalintensitäten ist. Im Idealfall sind die Lichtintensitätsmaxima gleich stark.

Um möglichst schnell zu einem Ergebnis der Optimierung zu kommen, kann vorgesehen sein, dass ein Parameterraum von Eigenschaften aller jeweils entlang einer, insbesondere der erwähnten, Korrespondenz-Suchrichtung gelagerten Musterelemente in einem der Optimierung vorgelagerten Schritt in möglichst homogener Zustandsdichte besetzt wird.

Es kann hierbei oder allgemein vorgesehen sein, dass die im Zuge der Optimierung zulässigen Größen der geglätteten Musterelemente oder Teilelemente innerhalb von für die genannte Metrik geeigneten Grenzen liegen, insbesondere wobei kleinstmögliche Musterelementgrößen oder Teilelementgrößen hinreichend groß und größtmögliche Musterelementgrößen oder Teilelementgrößen hinreichend klein gewählt sind, um allzu homogenen und deshalb für genannte Metrik unvorteilhaften Lichtintensitätsverläufen innerhalb des Beleuchtungsmusters vorzubeugen.

Es kann auch vorgesehen sein, dass eine typische Gestalt optischer Interferenzeffekte bei Überlagerung geglätteter Musterelemente oder Teilelemente für die Maximierung der genannten Metrik nutzbar gemacht wird, wobei die Ausprägung optischer Interferenz verschiedener Musterelemente bei der Simulation des Beleuchtungsmusters empirisch antizipiert werden kann.

Alternativ oder zusätzlich sind zur Lösung der genannten Aufgabe erfindungsgemäß die Merkmale des nebengeordneten, auf eine Tiefenbildberechnungseinrichtung gerichteten Anspruchs vorgesehen. Insbesondere wird somit zur Lösung der genannten Aufgabe bei einer Tiefenbildberechnungseinrichtung erfindungsgemäß vorgeschlagen, dass Mittel zur Ausführung eines erfindungsgemäßen Verfahrens, insbesondere wie zuvor beschrieben und/oder nach einem der auf ein Verfahren ausgerichteten Ansprüche, ausgebildet sind. Somit ist eine Vorrichtung bereitgestellt, die eine Anwendung des erfindungsgemäßen Verfahrens, insbesondere wir zuvor beschrieben und/oder nach einem der auf ein Verfahren gerichteten Ansprüche, erlaubt.

Allgemein können die Musterelemente und/oder die Teilelemente beispielsweise helle oder dunkle Bereiche des strukturierten Lichts definieren.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: eine stark vereinfachte Schemazeichnung einer erfindungsgemäßen Tiefenbildberechnungseinrichtung,
- Fig. 2: eine Basiszelle eines Musters von strukturiertem Licht zur Verwendung in einem erfindungsgemäßen Verfahren,
- Fig. 3: ein Musterelement mit zwei überlappenden Teilelementen eines Musters nach Fig. 2 in stark vereinfachter Darstellung,
- Fig. 4: eine Unterteilung einer Basiszelle in Elementarzellen,
- Fig. 5: eine Basiszelle mit einer stereoskopischen Korrespondenz-Suchrichtung und
- Fig. 6: einen Ablaufplan einer Generierung eines Musters zur Verwendung in einem erfindungsgemäßen Verfahren.

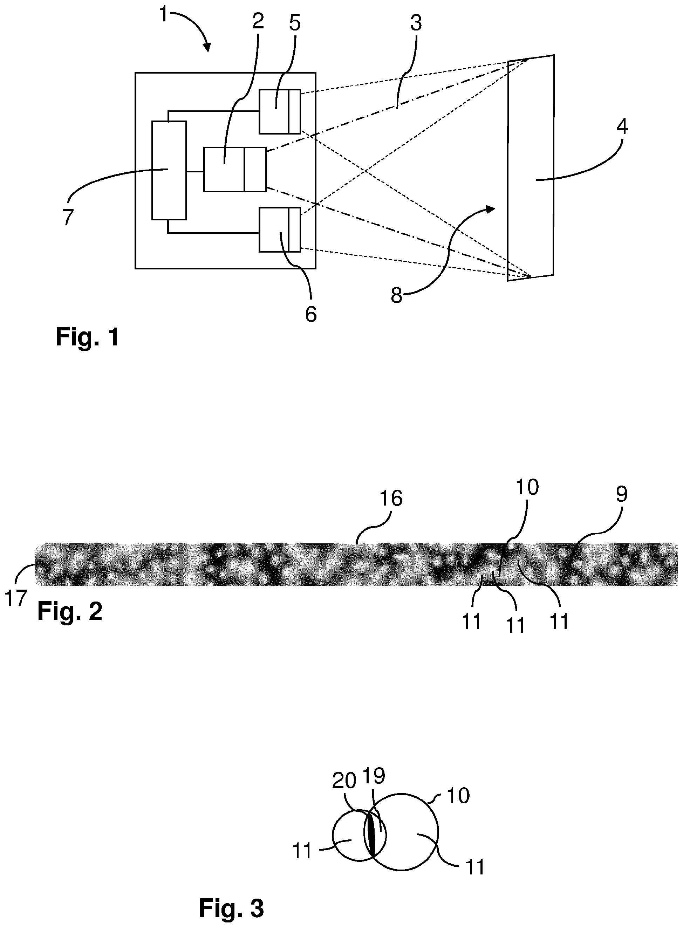

Fig. 1 zeigt eine im Ganzen mit 1 bezeichnete Tiefenbildberechnungseinrichtung.

Die Tiefenbildberechnungseinrichtung 1 hat einen Projektor 2, mit dem strukturiertes Licht 3 auf ein Objekt oder eine Szene 4 geworfen wird.

Die Tiefenbildberechnungseinrichtung 1 hat weiter zwei Kameras 5, 6, die in vorgegebenen Abstand zueinander parallel ausgerichtet sind.

Jede der Kameras 5, 6 nimmt ein stereoskopisches Bild der Szene auf.

In einer Recheneinheit 7 werden aus scheinbar unterschiedlichen Darstellungen korrespondierender Bildbestandteile in an sich bekannter Weise Tiefeninformationen extrahiert. Es ergibt sich somit ein Tiefenbild mit ortsabhängigen Tiefeninformationen.

Figur 2 zeigt beispielhaft eine periodische Basiszelle des Musters 8, aus der sich das Beleuchtungsmuster kachelförmig zusammensetzt.

Dargestellt ist eine Basiszelle 9, die periodische Randbedingungen hat, so dass sich Basiszellen in einer Weise glatt aneinanderreihen lassen, die minimale Selbstähnlichkeit von Musterumgebungen entlang der Korrespondenz-Suchrichtung auch über Basiszellgrenzen hinweg gewährleistet.

In der Basiszelle 9 sind Musterelemente 10 in Form von komplexen hellen Flecken erkennbar, die aus rotationssymmetrischen Teilelementen 11 zusammengesetzt sind. Die Musterelemente 10 sind jeweils zusammenhängend ausgebildet.

In Figur 2 ist ein Musterelement 10 bezeichnet, das aus einer Vielzahl von Teilelementen 11 zusammengesetzt ist, wobei hier nur wenige Teilelemente 11 bezeichnet sind.

Die rotationssymmetrischen Teilelemente 11 weisen keine harte Begrenzung auf, sondern haben jeweils einen Übergang zur Umgebung mit einer Glättungsbreite, die deutlich oberhalb eines Wertes liegt, der durch Beugung oder alternative Quellen unscharfer Abbildung typischerweise zustande kommt.

Figur 3 zeigt beispielhaft ein Musterelement 10, das aus zwei rotationssymmetrischen Teilelementen 11 zusammengesetzt ist.

Die Teilelemente 11 des Musters 8 in Figur 2 unterscheiden sich voneinander durch ihre Größe und Verteilungsbreite sowie ihre Lage innerhalb der ihnen jeweils zugeordneten Elementarzellen.

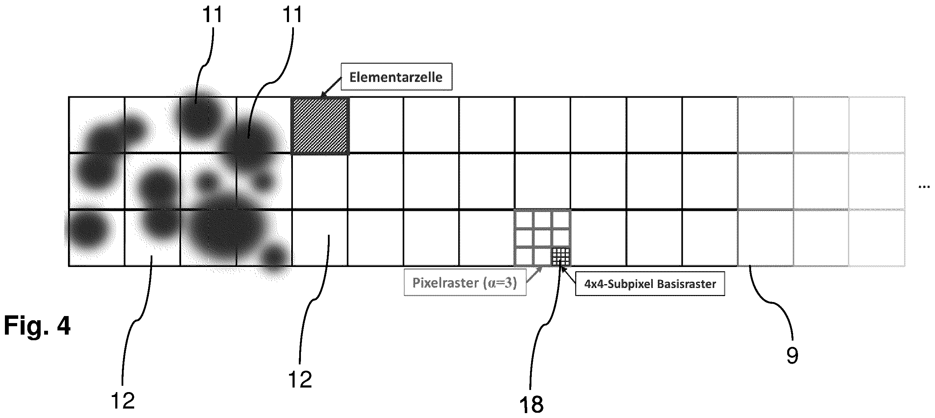

Figur 4 zeigt eine Unterteilung der Basiszelle 9 aus Figur 2 in quadratische, gleich große Elementarzellen 12 ("Einheitszellen"). Im Beispiel ist jede Elementarzelle 12 aus neun Pixeln 13 zusammengesetzt.

Jede Elementarzelle 12 hat genau ein Teilelement 11, dessen Intensitätsmaximum in der Elementarzelle 12 liegt, und jedes Teilelement 11 gehört in diesem Sinne zu einer Elementarzelle 12.

Die Elementarzellen 12 können ein regelmäßiges Muster (nicht gezeigt) definieren, bei dem beispielsweise ein einheitliches Teilelement 11 jeweils im Zentrum einer Elementarzelle 12 liegt.

Das Muster 8 aus Figur 2 hat demgegenüber Elementarzellen 12, deren Teilelemente 11 gegenüber der beschriebenen regelmäßigen Anordnung geändert sind. Im Beispiel sind Unterschiede hinsichtlich Größe, Glättungsbreite und Lage in der Elementarzelle 12 gegeben. Es entsteht so ein unregelmäßiges Muster. Die genannten Größen spannen einen Parameterraum auf, in dem die Teilelemente 11 beschreibbar sind.

Durch die Anordnung der Kameras 5, 6 zueinander ist eine Epipolarrichtung 14 gegeben, die einer Korrespondenz-Suchrichtung 15 entspricht, entlang derer korrespondierende Bildinhalte gesucht werden (vgl. Fig. 5).

Die Basiszelle 9 hat somit eine Längs-Kantenlänge 16 längs der Epipolarrichtung, die durch einen Disparitätsbereich eines die Kameras 5, 6 umfassenden Bildaufnahme- und Datenerfassungssystems, hier gegeben durch die Tiefenbildberechnungseinrichtung 1, bestimmt ist.

Quer zu dieser Richtung hat die Basiszelle 9 eine deutlich geringere Quer-Kantenlänge 17, die durch eine Größe einer zur stereoskopischen Korrespondenzsuche verwendeten Musterumgebung (Matching-Blockgröße) gegeben ist.

Der Projektor 2 hat zum Beispiel ein nicht weiter dargestelltes diffraktives Optisches Element, mit dem die rotationssymmetrischen Teilelemente 11 als Beugungsbild darstellbar sind.

Die Lichtmaxima der Teilelemente 11 sind so skaliert, dass alle Teilelemente 11 nahezu denselben Maximalwert haben.

Figur 5 zeigt die Basiszelle 9 mit einem Pixel 13, zu dem in dem jeweils anderen Bild der stereoskopischen Aufnahme mit den Kameras 5, 6 ein korrespondierender Bildinhalt gesucht werden soll.

Es ist hier die Korrespondenz-Suchrichtung 15 eingezeichnet, die in etwa mit der Epipolarrichtung 14 übereinstimmt, wobei Abweichungen zur Berücksichtigung von Fertigungstoleranzen zugelassen werden.

Figur 2 zeigt beispielhaft einen Überlapp-Bereich 19 zwischen Teilelementen 11, in dem sich Interferenzen 20 ausbilden. Diese Interferenzen 20 tragen zur Individualisierung der Teilelemente 11 bei und verringern die Selbstähnlichkeit noch weiter.

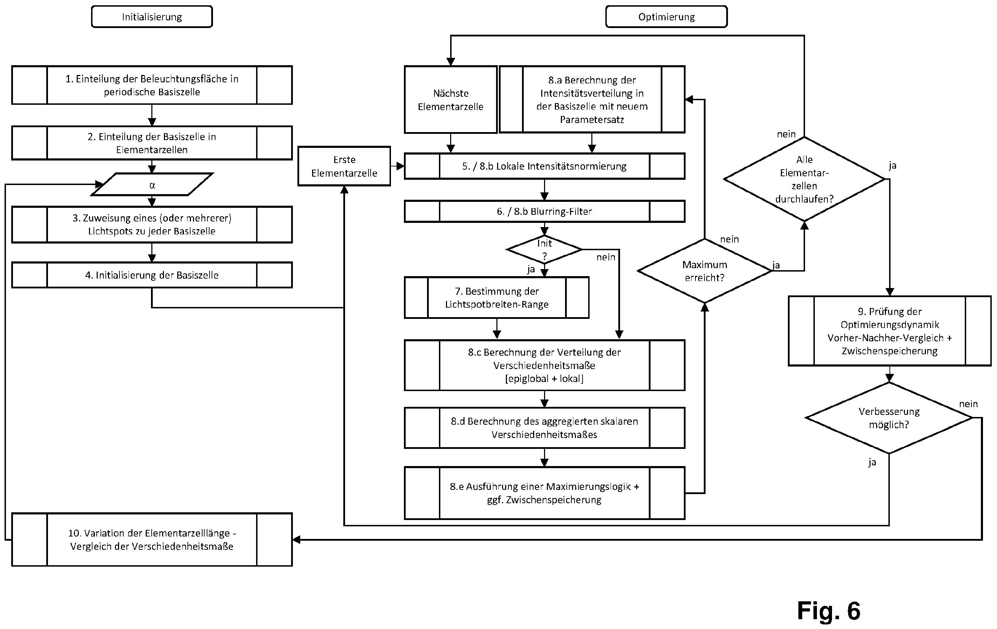

Figur 6 zeigt einen schematischen Ablaufplan zur Erzeugung eines Musters 8.
1. Einteilung der o.g. strukturiert zu beleuchtenden (vorzugsweise rechteckigen) Fläche in identische rechteckige Basiszellen 9,
   a. deren jede mindestens eine Pixelbreite aufweist, die dem im jeweiligen stereoskopischen Bildaufnahmesystem, hier der Tiefenbildberechnungseinrichtung 1, maximal zulässigen Disparitätsbereich zuzüglich der maximalen Breite der jeweils miteinander zu vergleichenden Pixelblöcke entspricht,
   b. und deren jede mindestens eine Pixelhöhe hat, die der maximalen Höhe der miteinander zu vergleichenden Pixelblöcke entspricht.
2. Einteilung jeder Basiszelle 9 in eine ganze Zahl vorzugsweise quadratischer sogenannter Elementarzellen 12 mit einer Kantenlänge entsprechend einer ganzen Zahl α an Pixeln 13. Diese Diskretisierung wirkt sich auf die Größe der Basiszelle 9 aus, da hierdurch eine Pixelbreite m·α entsprechend einem ganzzahligen Vielfachen m der Elementarzelllänge α und eine Pixelhöhe n·α entsprechend einem ganzzahligen Vielfachen n der Elementarzelllänge α erzwungen wird. Die Basiszelle 9 besteht somit aus einer matrixartigen Anordnung von **n·m** Elementarzellen 12. Die Elementarzelllänge α beträgt vorzugsweise 2, 3, oder 4 Pixel.
3. Zuweisung einer (oder mehrerer) elementaren Anregung (vorzugsweise in Gestalt einer gaußförmigen Beleuchtungsintensitätsverteilung) zu jeder Elementarzelle 12, ausgezeichnet durch einen Schwerpunkt innerhalb der Elementarzellfläche sowie durch eine Breite (Glättungsbreite) - vorzugsweise in Gestalt einer Standardbreite σ der gaußförmigen Beleuchtungsintensitätsverteilung. Damit besitzt jede Anregung drei Freiheitsgrade, nämlich die vertikale und horizontale Schwerpunktposition der Lichtanregung innerhalb der Elementarzelle 12, sowie die Breite der Anregung, die sich in einem für maximale Verschiedenheitsmaße zu vergleichender Pixelblöcke geeigneten Wertebereich bewegen soll. Lichtintensitäten benachbarter Elementarzellen 12 können sich überlagern und (insbesondere bei Verwendung einer Beleuchtungsvorrichtung bestehend aus kohärenter Lichtquelle und diffraktivem optischem Element) miteinander interferieren und formen so ein Musterelement 10. Die elementaren Anregungen entsprechen somit den Teilelementen eines Musterelements.
   a. Implementierung periodischer Randbedingungen an den Rändern der Basiszelle 9. Dies geschieht durch Berücksichtigung des Einflusses der Lichtintensitätsverteilung benachbarter und zur interessierenden Basiszelle 9 jeweils identischer Basiszellen 9.
4. Bestimmung einer initialen Konfiguration der Schwerpunktpositionen sowie der Breiten aller Lichtanregungen in ihren zugehörigen Elementarzellen 12 innerhalb der Basiszelle 9. Diese initiale Konfiguration sollte bereits das Verschiedenheitsmaß zu vergleichender Pixelblöcke (Musterumgebungen) in geeigneter Weise erhöhen. Dazu wird ausgenutzt, dass möglichst hohe Variabilität sowohl der vertikalen Schwerpunktposition wie auch der Breite der Lichtanregungen aller jeweils in Epipolarrichtung 14 (horizontal) aneinandergereihten Elementarzellen 12 das Verschiedenheitsmaß begünstigt. Alle drei Freiheitsgrade jeder Lichtanregung werden zunächst zufällig festgelegt. Jedoch besteht bei der Festlegung der vertikalen Schwerpunktposition sowie der Breite ein Vorbehalt einer nicht zu überschreitenden maximalen Dichte: D.h. liegt ein vertikaler Schwerpunkt oder eine Breite einer Lichtanregung kritisch nahe (d.h. unterhalb eines definierten Schwellwerts) an einem bereits bestehenden vertikalen Schwerpunkt oder einer bereits bestehenden Breite irgendeiner bereits positionierten Lichtanregung einer Elementarzelle 12 der gleichen Höhe innerhalb der Basiszelle 9, so wird dieser Wert verworfen und erneut zufällig festgelegt. Ist der Raum der zulässigen Parameter einer Lichtanregung bereits derart dicht besetzt, dass mit dem Schwellwert der jeweils maximal zulässigen Dichte kein weiterer geeigneter Wert gefunden werden kann, so wird die maximal zulässige Dichte so lange erhöht, bis allen Lichtanregungen der Elementarzellen 12 einer Höhe innerhalb der Basiszelle 9 optimale Initialparameter zugewiesen sind.
5. Normierung der Maximalintensitäten aller Lichtanregungen auf einen ungefähr gleichen Zielwert. Dies erfolgt iterativ, da sich die Intensitäten unmittelbar oder sogar mittelbar benachbarter Elementarzellen 12 überlagern können. Dabei wird jeweils die Amplitude jeder Anregung mit dem Verhältnis aus Soll-Maximalintensität und Ist-Maximalintensität multipliziert.
6. Anwendung eines Verschmierungsfilters (z.B. Gauß) auf die Beleuchtungsstruktur zur Repräsentation der charakteristischen Abbildungsschärfe der Beleuchtungsstruktur im Objektraum sowie des strukturiert beleuchteten Objektraumes im Bildaufnahmesystem.
7. Bestimmung geeigneter Grenzen zulässiger Lichtspotbreiten anhand folgender Kriterien:
   a. Existieren in Querschnittsprofilen durch die Basiszelle 9 Bereiche vernachlässigbarer Lichtintensität, die sich über mehrere Pixel 13 erstrecken, so ist die kleinste zulässige Breite zu klein gewählt. Damit werden Bildbereiche mit unzureichender Verschiedenheit zu vergleichender Bildumgebungen wahrscheinlich. In Verteilungsbreiten einer Gaußfunktion ausgedrückt hat sich ein Wert **σ ≥ 0,15·α** als geeigneter Minimalwert erwiesen.
   b. Unterschreitet das Verhältnis der maximalen Lichtintensität zu einer fiktiven homogenen Lichtintensität bei homogener Beleuchtung mit gleicher integraler Lichtleistung einen Faktor 1,8, so ist die größte zulässige Breite zu groß gewählt. Dadurch würde die verfügbare Lichtleistung nicht kontrastoptimal eingesetzt, und es entstünden sehr breite Lichtspots mit relativ geringer Verschiedenheit der darin befindlichen Bildumgebungen. In Verteilungsbreiten einer Gaußfunktion ausgedrückt hat sich hier ein Wert ***σ* ≤ 0,6·*α*** als geeigneter Maximalwert erwiesen.
8. Optimierung der so gewonnenen normierten initialen Lichtintensitätsverteilung durch schrittweise Maximierung eines skalaren Verschiedenheitsmaßes im Raum der drei **o.g.** Freiheitsgrade einer jeden Lichtanregung innerhalb der Basiszelle 9. Dabei werden alle Elementarzellen 12 sukzessive durchlaufen, und innerhalb jeder Elementarzelle 12 Nummer i wird folgendermaßen vorgegangen:
   a. Berechnung der Lichtintensitätsverteilung der gesamten Basiszelle 9 zu einem neuen, geeignet variierten Parametersatz, sofern nicht die initiale Beleuchtungsstruktur einfließt.
   b. Normierung der Maximalintensitäten und Anwendung eines Verschmierungsfilters (z.B. Gauß) zur Aufprägung eines für die Vorrichtung typischen Verschmierungsmaßes gemäß der Schritte 0 und 0.
   c. Berechnung von Verteilungen der Verschiedenheitsmaße für alle Pixel 13 im Einflussbereich der zur jeweiligen Elementarzelle 12 Nummer i gehörenden Lichtanregung. Der Einflussbereich schließt alle Pixel 13 der Basiszelle 9 ein, in denen die Lichtanregung einen nicht-vernachlässigbaren Intensitätsbeitrag liefert. Dies müssen nicht zwingend Pixel 13 der jeweiligen Elementarzelle 12 sein, sondern es können auch Pixel der unmittelbar oder mittelbar benachbarten Elementarzellen 12 sein.
      i. Es werden jeweils zwei Verteilungen von Verschiedenheitsmaßen berechnet, die sich aus zwei Optimierungszielen ableiten: Das erste Optimierungsziel besteht in einer möglichst hohen Verschiedenheit zu vergleichender nahe benachbarter Pixelblöcke (lokal). Das zweite Optimierungsziel besteht in einer möglichst hohen Mindestverschiedenheit aller entlang einer Epipolarlinie innerhalb des zulässigen Disparitätsbereichs zu vergleichenden Pixelblöcke (epiglobal).
      ii. Die Verteilung von Verschiedenheitsmaßen pro Pixel 13 ergibt sich jeweils aus dem Vergleich eines interessierenden Pixels 13 und seiner Umgebung (seines ihn umgebenden Pixelblocks) mit allen nah benachbarten (lokal) oder innerhalb des zulässigen Disparitätsbereichs benachbarten (epiglobal) Pixeln 13 und ihrer Umgebung entlang der Epipolarrichtung 14. Damit besitzt jedes Pixel 13 eine lokale und eine epiglobale Verteilung von Verschiedenheitsmaßen.
      iii. In der Verteilung von Verschiedenheitsmaßen pro Pixel 13 sind sämtliche sogenannten Subpixelkonfigurationen enthalten. Dies soll dem Umstand Rechnung tragen, dass die relative Lage zwischen Beleuchtungsstruktur und Pixelraster des Bildaufnahmesystems keine Präzision sehr viel kleiner als die Pixelabmessung aufweist. Das Pixelraster diskretisiert eine zunächst kontinuierliche laterale Intensitätsverteilung sowohl in seiner lateralen Auflösung als auch in Gestalt ganzzahliger Intensitätswerte. So müssen bei der Verschiedenheitsmaximierung alle möglichen relativen Lagen zwischen Beleuchtungsstruktur und Pixelraster berücksichtigt werden, was die Anzahl der miteinander zu vergleichenden Verschiedenheitsmaße stark erhöht. Hier wird die Fläche jedes Pixels 13 und seiner Umgebung bis zur Hälfte all seiner Nachbarn in ***k*²** mögliche Subpixellagen (vorzugsweise mit **k=4)** unterdiskretisiert. Die Verteilung lokaler Verschiedenheitsmaße vergleicht dann die *k*² zum interessierenden Pixel 13 gehörenden Subpixelblöcke 18 mit den zugehörigen nächsten, übernächsten, und über-übernächsten Nachbarn in beide Richtungen, woraus **3·2·*k*²** Verschiedenheitsmaße in der lokalen Verteilung enthalten sind. Die Verteilung der epiglobalen Verschiedenheitsmaße vergleicht dagegen alle ***k*²** zum interessierenden Pixel 13 gehörenden Subpixelblöcke 18 mit allen im zulässigen Disparitätsbereich entlang der (horizontalen) Epipolarrichtung 14 liegenden Subpixelblöcken. Unter Berücksichtigung einer hier ebenfalls zu verankernden Winkelfehlpassung zwischen der Epipolarrichtung 14 der Beleuchtungsstruktur und der Epipolarrichtung 14 der rektifizierten Stereobildaufnahmen kann die Anzahl der Verschiedenheitsmaße in der epiglobalen Verteilung bei einem Fehlpassungswinkel ***β*** und einem zulässigen Disparitätsbereich von **D** Pixeln mit **(*D*²*k*⁴tan*β*)/2** abgeschätzt werden.
      iv. Der Beitrag sogenannter schwacher Bits zum Verschiedenheitsmaß, also derjenigen Pixel 13 innerhalb eines Pixelblocks mit nur sehr geringer Abweichung (im Bereich des Bildrauschens) zum interessierenden (zentralen) Pixel 13, wird durch eine Zwangsbedingung eliminiert.
   d. Berechnung eines aggregierten skalaren Verschiedenheitsmaßes, das die Verschiedenheit aller innerhalb der gesamten Basiszelle 9 miteinander zu vergleichenden Pixelblöcke kennzeichnet.
      i. Eine vorteilhafte Ausführungsform des aggregierten skalaren Verschiedenheitsmaßes ist z.B. das Produkt aus der Summe aller von Null verschiedenen Minima der epiglobalen Verschiedenheitsverteilungen (aller Pixel) innerhalb der Basiszelle 9 mit der Summe aller null (oder eins, oder zwei) übersteigenden Minima der lokalen Verschiedenheitsverteilungen (aller Pixel) innerhalb der gesamten Basiszelle 9.
   e. Maximierung des aggregierten skalaren Verschiedenheitsmaßes für jede Elementarzelle 12 im Raum der drei freien Parameter ihrer zugehörigen Lichtanregung (Schwerpunktpositionen und Breite).
      i. So wird stets ein lokales Optimum in einem dreidimensionalen Unterraum des 3·n·m dimensionalen Parameterraums des Basiszell-Optimierungsproblems bestimmt.
      ii. Eine vorteilhafte Ausführungsform besteht in einer Berechnung des aggregierten skalaren Verschiedenheitsmaßes zunächst auf einem hinreichend feinteilig diskretisierten dreidimensionalen Gitter im Raum der freien Optimierungsparameter, gefolgt von mehrfachen gradientenbasierten Annäherungen an den Punkt maximaler Verschiedenheit im Parameterraum, jeweils ausgehend von den (beispielsweise drei) diskreten Gitterpunkten höchster Verschiedenheit.
9. Überprüfung der Optimierungsdynamik durch Vorher-Nachher-Vergleich des aggregierten skalaren Verschiedenheitsmaßes der gesamten Basiszelle 9, und abhängig davon Entscheidung über einen weiteren Durchlauf 0. [optional]
10. Nach Identifikation eines mit der Durchführung aller bisherigen Verfahrensschritte erzielten lokalen Optimalzustands können alle Verfahrensschritte unter Variation der Elementarzelllänge α durchlaufen werden, um das aggregierte skalare Verschiedenheitsmaß der Basiszelle auch in Abhängigkeit der Elementarzelllänge α zu maximieren. [optional]

Bei dem Verfahren zur Berechnung eines Tiefenbildes wird somit vorgeschlagen, strukturiertes Licht 3 mit einem geglätteten und/oder unregelmäßigen und/oder aus verschiedenartigen Musterelementen 10 zusammengesetzten Muster 8 zu verwenden.

### Bezugszeichenliste

- 1: Tiefenbildberechnungseinrichtung
- 2: Projektor
- 3: strukturiertes Licht
- 4: Szene
- 5, 6: Kamera
- 7: Recheneinheit
- 8: Muster
- 9: Basiszelle
- 10: Musterelement
- 11: Teilelement
- 12: Elementarzelle
- 13: Pixel
- 14: Epipolarrichtung
- 15: Korrespondenz-Suchrichtung
- 16: Längs-Kantenlänge
- 17: Quer-Kantenlänge
- 18: Subpixelblock
- 19: Überlapp-Bereich
- 20: Interferenz

## Patentansprüche

1. Verfahren zur Erzeugung von Tiefenbildern, wobei mit wenigstens zwei Kameras (5, 6) Bilder einer Szene (4) aufgenommen werden, wobei aus inhaltlichen Korrespondenzen zwischen den Bildern eine Tiefeninformation abgeleitet wird, wobei die Szene (4) während der Aufnahme der Bilder mit strukturiertem Licht (3) beleuchtet wird, wobei Kontrastverläufe des strukturierten Lichts (3) geglättet sind, **dadurch gekennzeichnet, dass** eine lokale Glättungsbreite in wenigstens einem Teilbereich größer als eine charakteristische Länge von Beugungseffekten und/oder Abbildungsfehlern einer Projektion des strukturierten Lichts (3) ist.

2. Verfahren zur Erzeugung von Tiefenbildern nach Anspruch 1, **dadurch gekennzeichnet, dass** das strukturierte Licht (3) zumindest in einem Teilbereich ein Muster (8) aufweist, bei dem unterschiedliche zusammenhängende, vorzugsweise helle oder dunkle, Musterelemente (10), insbesondere zusammenhängende Musterelemente (10) unterschiedlicher Größe und/oder Form und/oder Glättungsbreite, verwendet werden.

3. Verfahren zur Erzeugung von Tiefenbildern nach Anspruch 1 oder 2, **dadurch gekennzeichnet, dass** das strukturierte Licht (3) ein unregelmäßiges Muster (8), insbesondere in Bezug auf eine Lage und/oder eine Größe und/oder eine Form und/oder eine Glättungsbreite von zusammenhängenden, vorzugsweise hellen oder dunklen, Musterelementen (10), aufweist, insbesondere wobei ein vorzugsweise lokales Verschiedenheitsmaß auf dem Muster im Wesentlichen Werte oberhalb eines von Null verschiedenen Schwellwerts annimmt und/oder wobei eine lokale Unregelmäßigkeit des Musters (8) durch wenigstens einen charakteristischen Parameter, der eine Vielzahl von Werten annehmen kann, beschreibbar ist.

4. Verfahren nach einem der vorangehenden Ansprüche, **dadurch gekennzeichnet, dass** sich das Muster (8) aus kongruenten, vorzugsweise rechteckigen und/oder längs einer durch die Kameras (5, 6) ausgezeichneten Epipolarrichtung (14) ausgerichteten, Basiszellen (9) mit periodischen Randbedingungen zusammensetzt, insbesondere wobei eine Längs-Kantenlänge (16) der Basiszelle (9) entlang einer stereoskopischen Korrespondenz-Suchrichtung (15) mindestens einem Disparitätsbereich eines die Kameras (5, 6) umfassenden Bildaufnahme- und Datenerfassungssystems entspricht und/oder wobei eine Quer-Kantenlänge (17) der Basiszelle (9) mindestens einer Größe von zu einer stereoskopischen Korrespondenzsuche verwendeten Musterumgebungen entspricht.

5. Verfahren nach einem der vorangehenden Ansprüche, **dadurch gekennzeichnet, dass** das Muster (8), insbesondere jedes Musterelement (10), aus Teilelementen (11) zusammengesetzt ist, die durch einen Parameterraum parametrierbar sind, dessen Dimension kleiner als eine Anzahl von Teilelementen, insbesondere kleiner als eine Anzahl von Musterelementen (10) der Basiszelle oder kleiner als zehn ist.

6. Verfahren nach einem der vorangehenden Ansprüche, **dadurch gekennzeichnet, dass** das Muster (8) aus Teilelementen (11) zusammengesetzt ist, wobei die oder eine Basiszelle (9) in gleichgroße Elementarzellen (12) unterteilbar ist, so dass jeder Elementarzelle (12) wenigstens ein Teilelement (11), insbesondere genau ein Teilelement (11) oder eine gleichbleibende Anzahl von Teilelementen (11), zugeordnet ist, insbesondere durch eine Position eines Intensitätsextremwerts des Teilelements (11).

7. Verfahren nach einem der vorangehenden Ansprüche, **dadurch gekennzeichnet, dass** das Muster (8) rotationssymmetrische oder elliptische zusammenhängende, vorzugsweise helle oder dunkle, Teilelemente (11), insbesondere Teilelemente (11) mit unterschiedlichen Größen und/oder Glättungsbreiten, aufweist.

8. Verfahren nach einem der vorangehenden Ansprüche, **dadurch gekennzeichnet, dass** das strukturierte Licht (3) mit einem diffraktiven optischen Element erzeugt wird, insbesondere wobei sich überlagernde Musterelemente (10) oder Teilelemente (11) Interferenzen (20) bilden können.

9. Verfahren nach einem der vorangehenden Ansprüche, **dadurch gekennzeichnet, dass** Lichtintensitätsmaxima aller Teilelemente (11) in einem vorgegebenen Intensitätsband, insbesondere mit einer Breite, die weniger als 25%, bevorzugt weniger als 10%, einer mittleren Maximalintensität der Teilelemente beträgt, liegen.

10. Tiefenbildberechnungseinrichtung (1) mit Mitteln zur Ausführung eines Verfahrens nach einem der vorangehenden Ansprüche.

## Claims

1. Method for generating depth images, wherein images of a scene (4) are recorded using at least two cameras (5, 6), wherein depth information is derived from content correspondences between the images, wherein the scene (4) is illuminated with structured light (3) during the recording of the images, wherein contrast gradients of the structured light (3) are smoothed, **characterized in that** a local smoothing width in at least one subregion is greater than a characteristic length of diffraction effects and/or imaging errors of a projection of the structured light (3).

2. Method for generating depth images according to claim 1, **characterized in that** the structured light (3) has, at least in a subregion, a pattern (8) in which different contiguous, preferably light or dark, pattern elements (10), in particular contiguous pattern elements (10) of different size and/or shape and/or smoothing width, are used.

3. Method for generating depth images according to claim 1 or 2, **characterized in that** the structured light (3) has an irregular pattern (8), in particular with regard to a position and/or a size and/or a shape and/or a smoothing width of contiguous, preferably light or dark, pattern elements (10), in particular wherein a preferably local measure of dissimilarity on the pattern assumes substantially values above a threshold value different from zero and/or wherein a local irregularity of the pattern (8) can be described by at least one characteristic parameter which can assume a plurality of values.

4. Method according to one of the preceding claims, **characterized in that** the pattern (8) is composed of congruent, preferably rectangular, base cells (9) which are aligned along an epipolar direction (14) distinguished by the cameras (5, 6) and have periodic boundary conditions, in particular wherein a longitudinal edge length (16) of the base cell (9) along a stereoscopic correspondence search direction (15) corresponds to at least one disparity range of an image recording and data capture system comprising the cameras (5, 6) and/or wherein a transverse edge length (17) of the base cell (9) corresponds to at least one size of pattern environments used for a stereoscopic correspondence search.

5. Method according to one of the preceding claims, **characterized in that** the pattern (8), in particular each pattern element (10), is composed of sub-elements (11) which can be parameterized by means of a parameter space whose dimension is smaller than a number of sub-elements, in particular smaller than a number of pattern elements (10) of the base cell, or smaller than ten.

6. Method according to one of the preceding claims, **characterized in that** the pattern (8) is composed of sub-elements (11), wherein the or a base cell (9) can be subdivided into equally sized elementary cells (12) so that at least one sub-element (11), in particular exactly one sub-element (11) or a constant number of sub-elements (11), is associated with each elementary cell (12), in particular by a position of an intensity extreme value of the sub-element (11).

7. Method according to one of the preceding claims, **characterized in that** the pattern (8) has rotationally symmetrical or elliptical contiguous, preferably light or dark, sub-elements (11), in particular sub-elements (11) with different sizes and/or smoothing widths.

8. Method according to one of the preceding claims, **characterized in that** the structured light (3) is generated using a diffractive optical element, in particular wherein superimposed pattern elements (10) or sub-elements (11) can form interferences (20).

9. Method according to one of the preceding claims, **characterized in that** light intensity maxima of all sub-elements (11) lie in a predetermined intensity band, in particular with a width which is less than 25%, preferably less than 10%, of an average maximum intensity of the sub-elements.

10. Depth image calculation device (1) having means for carrying out a method according to one of the preceding claims.

## Revendications

1. Procédé de génération d'images de profondeur, dans lequel des images d'une scène (4) sont acquises à l'aide d'au moins deux caméras (5, 6), dans lequel une information de profondeur est dérivée d'informations de correspondance de contenu entre les images, dans lequel la scène (4) est éclairée pendant l'acquisition des images avec de la lumière structurée (3), dans lequel des courbes de contraste de la lumière structurée (3) sont lissées, **caractérisé en ce qu'**une amplitude de lissage locale dans au moins une zone partielle est plus grande qu'une longueur caractéristiques d'effets de diffraction et/ou des défauts de représentation d'une projection de la lumière structurée (3).

2. Procédé de génération d'images de profondeur selon la revendication 1, **caractérisé en ce que** la lumière structurée (3) présente, au moins dans une zone partielle, un motif (8) dans lequel sont utilisés des éléments de motif (10) cohérents différents, de préférence clairs ou foncés, en particulier de éléments de motif (10) de taille et/ou de forme et/ou d'amplitude de lissage différente.

3. Procédé de génération d'images de profondeur selon la revendication 1 ou 2, **caractérisé en ce que** la lumière structurée (3) présente un motif (8) irrégulier, en particulier en ce qui concerne une position et/ou une taille et/ou une forme et/ou une amplitude de lissage d'éléments de motif (10) cohérents, de préférence clairs ou foncés, en particulier dans lequel une grandeur de différence, de préférence locale, sur le motif prend pour l'essentiel des valeurs supérieures à un seuil différent de zéro et/ou dans lequel une irrégularité locale du motif (8) peut être décrite par au moins un paramètre caractéristique qui peut prendre plusieurs valeurs.

4. Procédé selon l'une des revendications précédentes, **caractérisé en ce que** le motif (8) se compose de cellules de base (9) congruentes, de préférence rectangulaires et/ou orientées le long d'une orientation épipolaire (14) tracée par les caméras (5, 6), qui ont des conditions marginales périodiques, en particulier dans lequel une longueur de côté longitudinal (16) de la cellule de base (9) le long d'une direction de recherche de correspondances stéréoscopique (15) correspond au moins à une plage de disparité d'un système de prise de vues et d'acquisition de données incluant les caméras (5, 6) et/ou dans lequel une longueur de côté transversal (17) de la cellule de base (9) correspond toujours à au moins une grandeur des environnements d'échantillonnage utilisés pour une recherche de correspondances stéréoscopique.

5. Procédé selon l'une des revendications précédentes, **caractérisé en ce que** le motif (8), en particulier chaque élément de motif (10), se compose d'éléments partiels (11) qui peuvent être paramétrés par un espace de paramètres dont la dimension est plus petite qu'un nombre d'éléments partiels, en particulier plus petite qu'un nombre d'éléments de motif (10) de la cellule de base ou inférieure à dix.

6. Procédé selon l'une des revendications précédentes, **caractérisé en ce que** le motif (8) se compose d'éléments partiels (11), la ou une cellule de base (9) pouvant être divisée en cellules élémentaires (12) de même taille, de sorte que chaque cellule élémentaire (12) est associée à au moins un élément partiel (11), en particulier à exactement un élément partiel (11) ou à un nombre constant d'éléments partiels (11), en particulier par une position d'une valeur extrême d'intensité de l'élément partiel (11).

7. Procédé selon l'une des revendications précédentes, **caractérisé en ce que** le motif (8) comporte des éléments partiels (11) cohérents symétriques en rotation ou elliptiques, de préférence clairs ou foncés, en particulier des éléments partiels (11) ayant des tailles et/ou des amplitudes de lissage différentes.

8. Procédé selon l'une des revendications précédentes, **caractérisé en ce que** la lumière structurée (3) est créée avec un élément optique diffractif, en particulier dans lequel des éléments de motif (10) ou des éléments partiels (11) qui se superposent peuvent créer des interférences (20).

9. Procédé selon l'une des revendications précédentes, **caractérisé en ce que** les maxima d'intensité lumineuse de tous les éléments partiels (11) se situent dans une plage d'intensité prédéterminée, en particulier d'une largeur représentant moins de 25 %, de préférence moins de 10 %, d'une intensité maximale moyenne des éléments partiels.

10. Installation de calcul d'images de profondeur (1) comprenant des moyens pour exécuter un procédé selon l'une des revendications précédentes.
